# EUROPEAN PATENT APPLICATION

(11) **EP 1 004 724 A2**
(43) Date of publication of application: **31.05.2000**
(21) Application number: 99309145.3
(22) Date of filing: 17.11.1999
(51) Int. Cl.: E04H 5/02

(54) **A process plant**

(30) Priority: 27.11.1998 GB 9825928
(71) Applicant: James, Chris, Northwich, Cheshire CW8 2TG (GB)
(72) Inventor: James, Chris, Northwich, Cheshire CW8 2TG (GB)
(74) Representative: Walker, Ross Thomson

(57) **Abstract**

The present invention provides a process or processing plant (10) comprising a plurality of transportable containers (1-5) each container (1-5) housing at least one component of the process plant.

## Description

The present invention relates to a process or processing plant. More particularly, the present invention relates to a process plant constructed from a plurality of transportable containers housing the components of the process plant.

Process plants come in numerous shapes and sizes depending on the product to be processed or produced thereby.

Generally, process plants are housed within a fixed structure, for example, a building. Much skill and labour is required to construct a process plant.

Problems arise when a process plant is to be constructed in areas where engineering skills and skilled labour are at a minimum. That is, if a process plant is to be constructed in such an area, the current practice is to employ persons with sufficient skill and knowledge who are willing to travel to, and live on or nearby, the construction site. This adds to the expense of constructing a process plant in such area.

Moreover, it is only when the process plant is constructed that same can be tested. As a result thereof, it is only on testing that any faulty components of the process plant can be identified such that they can be suitably repaired or replaced. In this connection, and if replacement of a component is deemed necessary, same will usually have to be obtained from another country. This causes delay.

According to the present invention there is provided a process plant as specified by claim 1. The process plant is constructed by suitably positioning the containers and effecting suitable connections between the components housed therein.

It is believed that the process plant of the present invention overcomes the problems associated with conventional process plants outlined above. In particular, the process plant of the present invention can be tried and tested before being transported to the site on which it is to be constructed. Additionally, the process plant of the present invention is easier to construct and consequently, can be constructed and located in areas were engineering skills and a skilled workforce are at a minimum.

In a preferred embodiment of the present invention, the transportable containers of the process plant are adapted to receive suitable external cladding so that same when located on site to all intents and purposes resembles a factory unit. Additionally, same can be provided with a sloping roof such that rain and other types of precipitation do not collect on the tops of the containers.

One non-limiting embodiment of a process plant in accordance with the present invention will now be described by way of example and with reference to the accompanying drawings in which:
Fig. 1 is a side perspective view of the containers of a process plant in accordance with the present invention;
Figs. 2A and 2B is a process flowsheet illustrating the location of the components housed within the containers of Fig. 1;
Fig. 3 is a perspective view of a process plant in accordance with the present invention when fully constructed; and
Fig. 4 is a plan view of a process plant in accordance with the present invention.

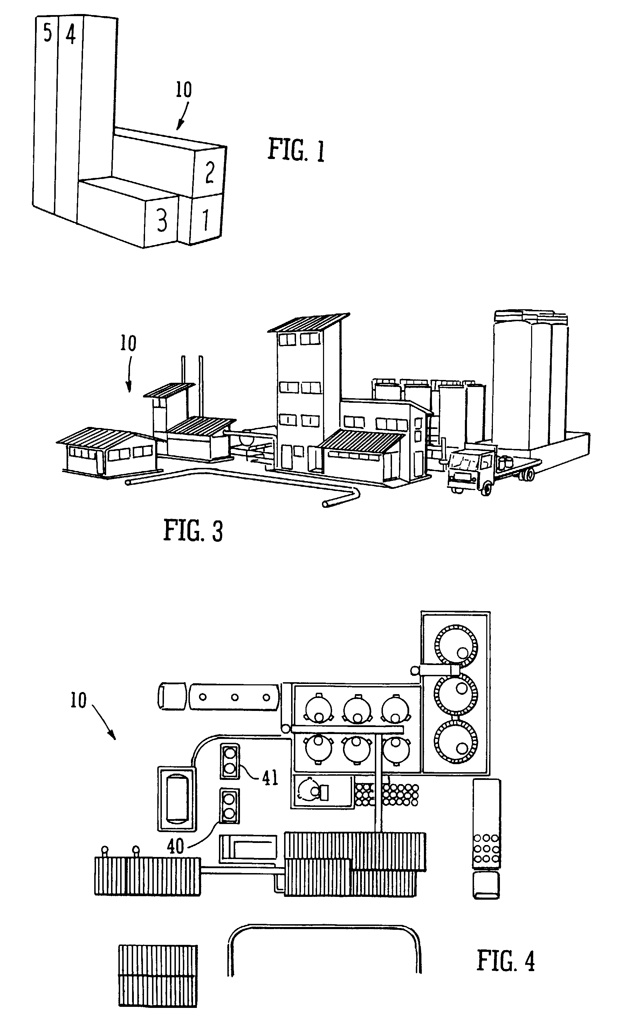

As illustrated in Fig. 1, an edible oil refinery 10 in accordance with the present invention, comprises five transportable containers 1-5 housing the components of the refinery 10. Such containers 1-5 are transportable and can be transported to a selected construction site via conventional means, such as by road, by rail and by sea. Once suitable foundations are prepared, the containers can be placed thereon.

Containers 1 and 2 comprise the neutralising components, container 3 comprises the dry storage components, container 4 houses the bleaching and filtration components and container 5 comprises the deodorising components of the refinery 10.

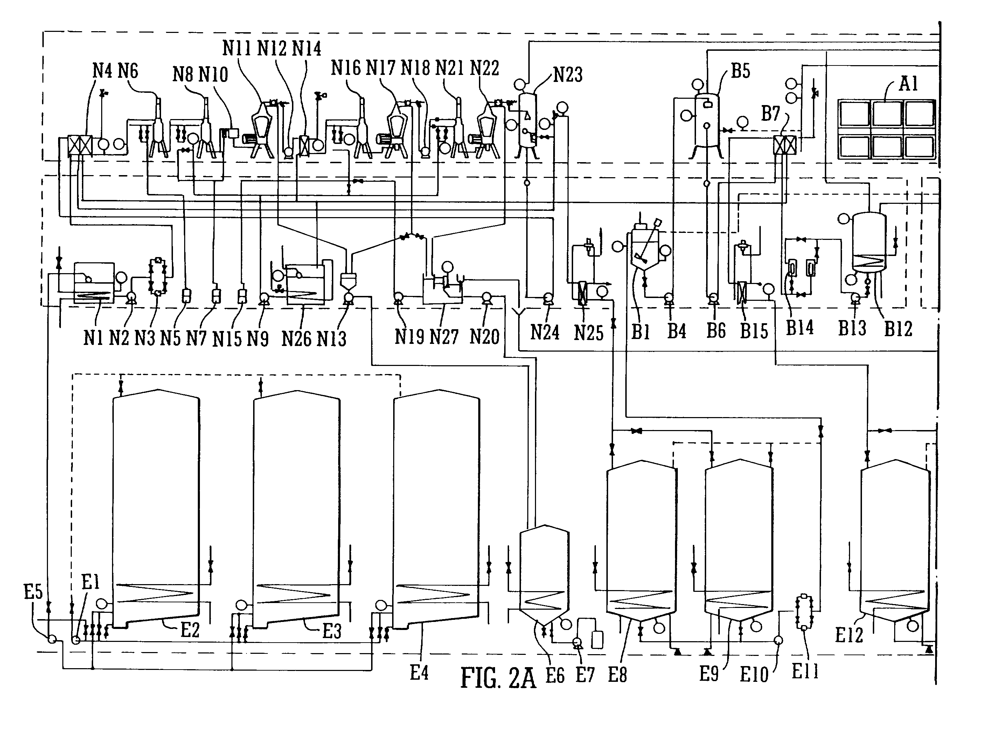

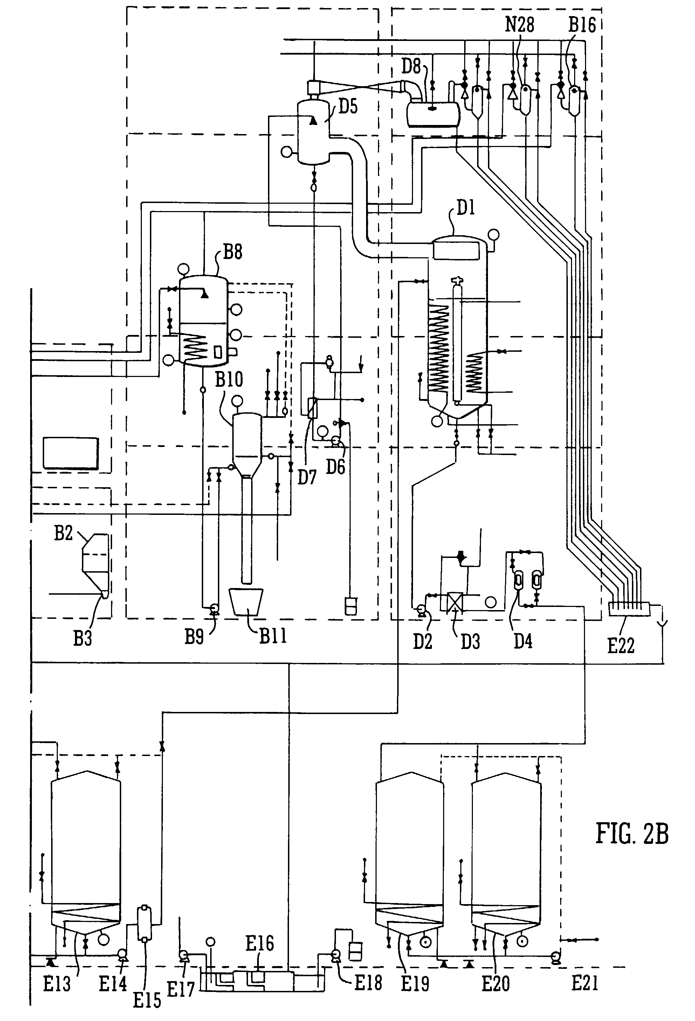

As illustrated in Fig. 2, containers 1 and 2 which house the components of the refinery 10 which carry out the neutralising steps of the refining process. Such neutralising components comprise;

### N1 Crude Oil Vessel

A 750L rectangular carbon steel vessel which is secured to the floor of the container 1. A coil is fitted for steam heating. Additionally the vessel is insulated and fitted with a top access manway for product sampling and maintenance access purposes. Furthermore, a temperature sensor and float valve are also fitted.

### N2 Pump - Crude Oil

A gear pump driven by integral point 75KW IP55 rated motor. Rated to deliver 2000 LPH (litres per hour) to the oil heater N4 via the duplex feed strainer N3. The pump body and gears are of hardened cast iron. The components are of stainless steel and the mechanical seal is fitted within the wetted area. The pump is of a monobloc design and can be bolted directly to a plinth set on the floor of the container 1.

### N3 Feed Strainer

A duplex unit of cast iron-steel construction with st. baskets of 80 microns. The filter is set within pipeworks connected between the pump-crude oil N2 and oil heater N4.

### N4 Oil Heater-Crude Oil

A container wall mounted plate heat exchanger with economiser section for the purposes of raising the oil temperature from 40 to 90° C. Construction is of Tp.316 grade stainless steel plate and high temperature nitrile joints for wetted surfaces. Other surfaces are preferably of an epoxy painted carbon steel. Steam heating is effected via a servo controlled valve.

### N5 Acid Dosing

A metering pump driven by an integral 0.1KW IP55 rated motor, container wall mounted adjacent to a carboy of phosphoric acid. The metering pump is to be manually set in accordance with the oil quality and flow rate as determined at the pump - crude oil N2. Construction is of Tp.316 grade stainless steel with chrome plated plungers and Ptfe joints. Other surfaces are of an epoxy painted steel.

### N6 Mixer No. 1 - Acid Conditioning

A twin compartment dispersion /mixer unit of the high speed knife type driven by an integral 4KW IP55 rated motor. Construction is of a Tp.304 grade stainless steel with Viton joints. The mixer is bolted directly to a plinth set on the floor of the container 2.

### N7 Caustic Dosing

A metering pump driven by an integral 0.10KW IP55 rated motor, container wall mounted adjacent to a carboy containing caustic soda liquor at 47% strength. The metering pump is to be manually set in accordance with the oil quality and flow rate as determined at the pump - crude oil N2. Construction is preferably of a Tp 316 grade stainless steel with chrome plated plungers and Ptfe joints. Other surfaces are of epoxy painted carbon steel.

### N8 Mixer No. 2 - Interstage

A twin compartment dispersion/mixer unit of the high speed knife type driven by an integral 4KW IP55 rated motor. Construction is of a Tp.304 grade stainless steel with Viton joints. The mixer is bolted directly to a plinth set on the floor of the container 1.

### N9 Pump - Hot Water

A centrifugal pump driven by an integral 0.5KW IP55 rated motor and rated to deliver 750 LPH to the mixers N8, N16 and N21. The pump body and impeller are of hardened cast iron/s. Stainless steel components and a mechanical seal are fitted within the wetted area. The pump is of a monobloc design and can be bolted directly to a bracket mounted on the wall of the container 1.

### N10 Mixer No. 3 - Short Mix

A container wall mounted disc type unit of Tp.304 grade stainless steel construction driven by an integral 4KW IP55 rated motor.

### N11 Separator No. 1 - Refining

A centrifugal separator of standard construction, solid-bowl type. In this position, the separator N11 functions as a refining separator for the removal of soapstock. A bowl flushing facility is provided for the removal of sludge. The machine is fitted with speed and vibration sensors and a constant pressure valve at the light phase discharge. The separator is driven by a 5.50KW IP55 rated motor with clutch drive. Construction is preferably of epoxy painted cast/forged steel with stainless steel wetted parts.

### N12 Pump - Refining

A centrifugal pump driven by a integral 0.75KW IP55 rated motor. Located adjacent to separator No. 1 N11, and rated to deliver 2000 LPH to the separator N17 via the Oil Heater N14. The pump body and impeller are of hardened cast iron/steel components and a mechanical seal is fitted within the wetted area. The pump is of monobloc design and can be bolted directly to a plinth set on the floor of the container 2.

### N13 Pump - Soap Stock

A gear pump driven by an integral 0.75KW IP55 rated motor. Preferably, located adjacent to the hot water vessel N26 and preferably rated to deliver 750 LPH to the soap stock storage tanks E6. The pump body and gears are of hardened cast iron/steel components and mechanical seal is fitted within the wetted area. The pump is of monobloc design and can be bolted directly to the plinth set on the container floor. At the pump inlet is mounted a hopper to aid the flow of gravity fed soapstock and water washings.

### N14 Oil Heater- Refining

A container wall mounted plate heat exchanger for the purposes of raising the oil temperature from 70 to 95° C. Construction is of Tp.316 grade stainless steel plates and high temperature nitrile joints for wetted surfaces. Other surfaces are of epoxy painted carbon steel. Steam heating is effected via a servo controlled valve.

### N15 Caustic Dosing

A metering pump driven by an integral 0.1KW IP55 rated motor, container wall mounted adjacent to a carboy containing caustic soda liquor at 47% strength. The metering pump is be manually set in accordance with the oil quality and flow rate as determined at the pump - crude oil N2. Construction is of Tp.316 grade stainless steel with chrome plated plungers and Ptfe joints. Other surfaces are of epoxy painted carbon steel.

### N16 Mixer No. 4 - Refining/Wash

A twin compartment dispersion/mixer unit of the high speed knife type driven by an integral 4KW IP55 rated motor. Construction is of Tp.304 grade stainless steel with Viton joints. The mixer is bolted directly to a plinth set on the container floor.

### N17 Separator No. 2 - Refining/Wash

A centrifugal separator of standard construction, solid-bowl type. In this position, its function is as a "refining" or "wash" separator for the removal of soapstock and/or wash water. A bowl flushing facility is provided for the removal of sludge. The machine is fitted with speed and vibration sensors and a constant pressure valve at the "light phase" discharge. The separator is driven by a 5.50KW IP55 rated motor with clutch drive. Construction is of an epoxy painted cast/forged steel with stainless steel wetted parts.

### N18 Pump - Refining

A centrifugal pump driven by an integral 0.75KW IP55 rated motor. Located adjacent to the separator N17 and preferably rated to deliver 2000 LPH to the separator N22 via the mixer N21. The pump body and impeller are of hardened cast iron/steel components and a mechanical seal is fitted within the wetted area. The pump is of monobloc design and bolted directly to a plinth set on the floor of the container 1.

### N19 Pump - Recycled Hot Water

A centrifugal pump driven by an integral 0.50KW IP55 rated motor and rated to deliver 750 LPH to the mixer N16. The pump body and impeller are of hardened cast iron/s. Stainless steel components and a mechanical seal is fitted within the wetted area. The pump is of monobloc design and preferably bolted directly to a bracket mounted on the wall of the container 1.

### N20 Pump - Recovered Oil/Soap

A gear pump driven by an integral 0.25KW IP55 rated motor. Located adjacent to the oil/water separator vessel N27 and rated to deliver 500 LPH to the soap stock storage tank E6. The pump body and gears are of hardened cast iron/steel components and a mechanical seal is fitted within the wetted area. The pump is of monobloc design and can be bolted directly to a plinth set on the floor of the container 1.

### N21 Mixer No. 5 - Wash

A twin compartment dispersion/mixer unit of a high speed knife type driven by an integral 4KW IP55 rated motor. Construction is of Tp.304 grade stainless steel with Viton joints. The Mixer is bolted directly to a plinth set on the floor of the container 2.

### N22 Separator No. 3 - Wash

A centrifugal separator of standard construction, solid-bowl type. In this position, its function is as a wash separator for the removal of wash water. A bowl flushing facility is provided for the removal of sludge. The machine is fitted with speed and vibration sensors and a constant pressure valve at the light phase discharge. The separator is driven by a 5.50KW IP55 rated motor with clutch drive. Construction is of epoxy painted cast/forged steel with stainless steel wetted parts.

### N23 Drier

A 450L vessel of vertical cylindrical carbon steel construction equipped with spray head, multiple film plates, high level sight glass and detector, also an operating level illuminated sight glass, float level control and vacuum pressure gauge. Operation will be at approximately 50 mbar.a via indirect connection to the vacuum plant N28. The vessel is supported by three tubular legs which are mounted or secured to the floor of the container 2.

### N24 Pump - Drier Extract

A centrifugal pump of low NPSH extraction type driven by an integral 1.50KW IP55 rated motor. Located beneath the drier N23 and rated to deliver 2000 LPH to the oil cooler N25 via the regeneration section of the oil heater N4. The pump body and impeller are of hardened cast iron/steel components and a mechanical seal is fitted within the wetted area. The pump is of monobloc design and can be bolted directly to a plinth set on the floor of the container 1.

### N25 Oil Cooler - Neutralised Oil

A container wall mounted plate heat exchanger for the purpose of lowering the oil temperature to 50° C prior to storage. Construction is of Tp.316 grade stainless steel plates and high temperature nitrile joints for wetted surfaces. Other surfaces are of epoxy painted carbon steel. Tempered water cooling is effected via a mixing valve.

### N26 Hot Water Vessel

A 1000L rectangular stainless steel vessel, mounted to the floor of the container 1. A coil is fitted for steam heating. The vessel is insulated and fitted with a top access manway for water sampling and maintenance access purposes. A temperature sensor and float valve are also fitted.

### N27 Oil/Water Separator Vessel

A 2000L rectangular, stainless steel vessel mounted to the floor of container 1. This is a compartmented tank arranged to separate free floating oils/soaps which are then discharged to soap stock storage leaving lightly contaminated hot water for further use in water washing. A coil is fitted for steam heating. The vessel is insulated and fitted with a top access manway for water/oil sampling and maintenance access purposes. A temperature sensor and float type level control are also fitted.

### N28 Vacuum Plant

A two stage ejector incorporating a single jet condenser operating at 50 mbar.a. Construction of the ejectors is of cast iron having stainless steel nozzles and the condensor of carbon steel.

The components housed within container 4 which carries out the bleaching and filtration steps in the refinery process are as follows:-

### B1 Earth Slurry Vessel

A vertical cylindrical carbon steel vessel of approximately 1,250L capacity for the continuous production of a slurry of bleaching earth with neutral oil. Bleaching earth is maintained in suspension by means of a high speed agitator driven by an integral 0.25KW IP55 rated motor. Blend proportions are maintained by manual pre-setting of the earth feeder B3 and pump - neutral oil transfer E10. Both feed units being under the control of a single level control. The vessel is supported by three tubular legs which are secured to the floor of the container 4.

### B2 Earth Hopper

An inverted cone shaped bleaching earth container. Wall mounted and constructed of stainless steel sheet materials having approximately a 350L capacity. This unit provides a buffer stock of earth available for automatic discharge into the earth slurry vessel B1.

### B3 Earth Feeder

A screw feeder unit connected to the base of the earth hopper B2 and discharging, by means of a formed tube with central helical screw driven by an integral 0.25KW IP55 rated motor, into the earth slurry vessel B1.

### B4 Pump - Earth Slurry

A gear pump driven by an integral 0.75KW IP55 rated motor. Located adjacent to the earth slurry vessel B1 and rated to deliver 2000 LPH to the deaerator B5. The pump body and gears are of hardened cast iron/steel components and a mechanical seal is fitted within the wetted area. The pump is of monobloc design and bolted directly to a plinth set on the floor of the container 4.

### B5 Deaerator

A 750L vessel of vertical cylindrical carbon steel construction equipped with high level sight glass and detector, also an operating level illuminated sight glass, float level control and vacuum pressure gauge. Operation will be at approximately 50 mbar.a via indirect connection to the vacuum plant B16. The vessel is preferably supported by three tubular legs which are secured to the floor of container 4.

### B6 Pump - Deaerator Extract

A centrifugal pump of low NPSH extraction type driven by an integral 1.00KW IP55 rated motor. Located beneath the deaerator B5 and rated to deliver 2000 LPH to the bleacher B8 via the oil heater B7. The pump body and impeller are of hardened cast iron/steel components and an mechanical seal is fitted within the wetted area. The pump is of monobloc design and can be bolted directly to a plinth set on the floor of the container 4.

### B7 Oil Heater - Earth Slurry

A container, wall mounted, plate heat exchanger with economiser section for the purposes of raising the oil temperature from 50 to 100 °C. Construction is of Tp.316 grade stainless steel plates and high temperature nitrile joints for wetted surfaces. Other surfaces are of epoxy painted carbon steel. Steam heating is effected via a servo controlled valve.

### B8 Bleacher

A 5000L vertical carbon steel pressure vessel fitted with a dished top and bottom. Designed with multiple shell mounting for horizontal transit via cantilever brackets. A coil is fitted for steam heating, a temperature maintenance, being of fully welded seamless carbon steel. Bleaching earth is maintained in suspension by means of a side mounted agitator having an integral 5.50KW IP55 rated motor. The vessel is insulated and fitted with a top access manway, sight and light glasses and instruments for level control and temperature/pressure indication. Operation will be at approximately 50 mbar.a via indirect connection to the vacuum plant B16.

### B9 Pump - Bleacher Extract

A centrifugal pump of low NPSH extraction type driven by an integral 1.50KW IP55 rated motor. Located beneath the bleacher B8 and rated to deliver 2000 LPH to the leaf filter B10. The pump body and impeller are of hardened cast iron/steel components and a mechanical seal is fitted within the wetted area. The pump is of monobloc design and can be bolted directly to a plinth set on the container floor.

### B10 Leaf Filter

A vertical cylindrical filter unit having 12.5 M² of filter area formed out of 11 leaves. The vessel construction is of carbon steel painted externally, whilst each leaf is of layered Tp.316 stainless steel. The centre screen is of 4 x 4 mesh using a wire of 1.6mm; the support screen is of 8 x 8 mesh using a wire of 0.7 mm and the filter screen is of 24 x 110 dutch weave using a wire of 0.26/0.36mm. The filter leaves are assembled upon a common frame with pneumatic vibrator and the separated earth is discharged via a large bore butterfly valve.

### B11 Cake Skip

An open top hopper of capacity of approximately 750L. Heavy duty carbon steel fabricated construction and having steep sloping sides arranged for ready positioning by fork lift truck beneath the leaf filter B10.

### B12 Hold Vessel

An 850L vessel of vertical cylindrical carbon steel construction. The vessel is insulated and a coil is fitted for steam heating, temperature maintenance. Operation will be approximately 50 mbar.a via indirect connection to the vacuum plant B16. Sight and light glasses may be fitted, as are instruments for level and temperature indication. The vessel is supported by three tubular legs which are secured to the floor of container 4.

### B13 Pump - Hold Vessel Extract

A centrifugal pump of low NPSH extraction type driven by an integral 1.50KW IP55 rated motor. Located beneath the hold vessel B5 and rated to deliver approximately 2000 LPH to bleached oil storage via the earth filter B14 and oil cooler B15. The pump body and impeller are of hardened cast iron/steel components and a mechanical seal is fitted within the wetted area. The pump is of monobloc design and bolted directly to a plinth set on the floor of the container 4.

### B14 Earth Filter

A duplex unit of cast iron/steel construction with polyester baskets of 10 microns nominal. The filter is wall mounted and set within pipeworks connected between the pump - hold vessel extract B13 and oil cooler B15.

### B15 Oil Cooler - Bleach Oil

A container wall mounted plate heat exchanger for the purposes of lowering the oil temperature to 50 °C prior to storage. Construction is preferably of Tp316 grade stainless steel plates and high temperature nitrile joints for wetted surfaces. Other surfaces are of expoxy painted carbon steel. Tempered water cooling is effected via a mixing valve.

### B16 Vacuum Plant

A two stage ejector system incorporating a single jet condensor operating at 50 mbar.a. Construction of the ejectors is of cast iron having stainless steel nozzles and the condensor of carbon steel.

The components housed within container 5 which carry out the deodorising process steps are as follows:-

### D1 Deodoriser

A 16000L vertical cylindrical stainless steel pressure vessel fitted with a dished top and bottom. Designed with multiple shell mounting for horizontal transit via cantilever brackets. A split section coil is fitted for both steam heating and cooling. This is of fully welded construction and formed out of seamless stainless steel. The vessel is insulated and fitted with side access manway for maintenance purposes. Sight and light glasses are fitted, together with instruments for level sensing and temperature/pressure indication. Sample and citric acid addition points are also provided.

The deodorisation principle is essentially one of a vomit tube design. Steam enters the oil via a perforated cylinder within a concentric vessel. The expanding steam forces the oil against an impingement baffle positioned above the pump or injection tube. Intimate contact between steam and oil takes place within the circulating body of the oil and at the upper impingement baffle. Steam and distilled vapours are separated from the oil at the edge of the upper baffle, with the oil returning to the body of the vessel and the vapours continue to the deodoriser vapour space and exit via the vacuum duct to the vapour scrubber D5 en route to the vacuum plant D8. Operation will be at a high vacuum approximately 4-6 mbar.a.

### D2 Pump - Deodoriser Extract

A centrifugal pump driven by an integral 5.50KW IP55 rated motor. Located beneath the deodoriser, D1 and rated to deliver 25000 LPH to deodorised oil storage via the oil cooler D3 and polishing filter D4. The pump body and impeller are preferably of hardened cast iron/steel components and a mechanical seal is fitted within the wetted area. The pump is of monobloc design and can be bolted directly to a plinth set on the container floor.

### D3 Oil Cooler - Deodorised Oil

A container wall mounted plate heat exchanger for the purposes of lowering the oil temperature from 80 to 50°C prior to storage . Construction is of Tp.316 grade stainless steel plates and high temperature nitrile joints for wetted surfaces. Other surfaces are of epoxy painted carbon steel. Tempered water cooling is effected via mixing valve.

### D4 Earth Filter

A duplex unit of cast iron/steel construction with polyester baskets of 2 micron nominal. The filter is wall mounted and set within pipeworks connected between the pump - deodoriser extract D2 and the discharge to refine oil storage.

### D5 Vapour Scrubber

A 1500L vessel of vertical cylindrical stainless steel construction, fitted with a dished top and bottom. Designed for multiple shell mounting for horizontal transit via cantilever brackets. The vessel is insulated and equipped with a spray head, high level illuminated sight glass, detector, vacuum pressure gauge and temperature sensor. Operation will be at high vacuum approximately 4 to 6 mbar.a, via indirect connection to the vacuum plant D8.

### D6 Pump - Vapour Scrubber Extract

A centrifugal pump of low NPSH (Net Positive Suction Head) extraction type driven by an integral 0.50KW IP55 rated motor. Located beneath the vapour scrubber D5 and rated to recirculate 500 LPH from the base reservoir of the vapour scrubber D5 via the FAD cooler D8 and back to the vapour scrubber spray head. The pump body and impeller are of hardened cast iron/s. Stainless steel components and a mechanical seal is fitted within the wetted area. The pump is of monobloc design and can be bolted directly to a bracket mounted off the container wall.

### D7 FAD Cooler

A container wall mounted tubular heat exchanger for the purposes of lowering the FAD oil temperature prior to use as an oil vapour direct condensing medium in the vapour scrubber D5. Construction is of Tp.316 grade stainless steel throughout. Tempered water cooling is effected via mixing valve.

### D8 Vacuum Plant

A three stage ejector system incorporating a large low level jet condensor and a further intercondensor of standard level operating construction. A fourth ejector is used for quick start purposes. The system is to operate at high vacuum approximately 4 to 6 mbar.a. Construction of the ejectors is of cast iron having stainless steel nozzles and the condensers are of carbon steel.

As illustrated in Figs. 2 and 4, the refinery in accordance with the present invention is connectable to:

### E1 Pump - Oil Receipt/Recycle

A centrifugal pump driven by an integral 5.5KW IP55 rated motor. Located at the tanker bay and rated to receive or recirculate up to 45000 LPH. The pump body and impeller are of hardened cast iron/steel components and a mechanical seal is fitted within the wetted area. The pump is of monobloc design and can be bolted directly to a concrete plinth.

### E2 Oil Storage Tank

A vertical cylindrical carbon steel tank of approximately. 120,000L storage capacity fitted with an internal seamless carbon steel coil designed for temperature maintenance/adjustment. Construction details would comprise of a con top, sloping base with sump and water drain. Top and side access manways are also provided.

### E3 Oil Storage Tank

A vertical cylindrical carbon steel tank of approximately. 120,000L storage capacity as item E2 above.

### E4 Oil Storage Tank

A vertical cylindrical carbon steel tank of approximately 120,000L storage capacity as item E2 above.

### E5 Pump - Crude Oil Transfer

A centrifugal pump driven by an integral 1.10KW IP55 rated motor. Located at the tanker bay and rated to discharge 3000 LPH. The pump body and impeller are of hardened cast iron/steel components and a mechanical seal is fitted within the wetted area. The pump is of monobloc design and can be bolted directly to a concrete plinth.

### E6 Soap Stock Storage

A vertical cylindrical carbon steel insulated tank of approximately 5,000L storage capacity fitted with an internal seamless carbon steel coil designed for temperature maintenance/adjustment at approximately 50°C. Construction details would comprise of a cone top with access manway and steep cone base having an independent water drain and soap/oil drain outlet connection. Support to be via three equidistant legs.

### E7 Pump - Drum Filling

A gear pump driven by an integral 0.25KW IP55 rated motor. Located adjacent to the soap stock storage tank E6 and rated to deliver 500 LPH. The pump body and gears are of hardened cast iron/steel components and a mechanical seal is fitted within the wetted area. The pump is of monobloc design and can be bolted directly to a concrete plinth.

### E8 Neutral Oil Storage Tank

A vertical cylindrical carbon steel insulated tank of approximately 30,000L storage capacity fitted with an internal seamless carbon steel coil designed for temperature maintenance/adjustment at approximately 50°C. Construction details would comprise of a cone top with top and side access manways and a cone base. Support is via three equidistant legs suitable for load cell operation.

### E9 Neutral Oil Storage Tank

A vertical cylindrical carbon steel insulated tank of approximately 30,000L storage capacity as E8.

### E10 Pump - Neutral Oil Transfer

A centrifugal pump driven by an integral 1.10KW IP55 rated motor. Located adjacent to the drum bay and rated to discharge 3000 LPH. The pump body and gears are of hardened cast iron/steel components and a mechanical seal is fitted within the wetted area. The pump is of monobloc design and can be bolted directly to a concrete plinth.

### E11 Feed Strainer

A duplex unit of cast iron/steel construction with st. st. baskets of 80 microns. The filter is set within pipeworks connected between the pump - neutral oil transfer, E10 and earth slurry vessel, B1.

### E12 Bleached Oil Storage Tank

A vertical cylindrical carbon steel insulated tank of approximately 30,000L storage capacity fitted with an internal seamless carbon steel coil designed for temperature maintenance/adjustment at approximately 50°C. Construction details would comprise of a cone top with top and side access manways and a cone base. The tank E12 is supported via three equidistant legs suitable for load cell operation.

### E13 Bleached Oil Storage Tank

A vertical cylindrical carbon steel insulated tank of approximately 30,000L storage capacity as E8 above.

### E14 Pump - Bleached Oil Transfer

A centrifugal pump driven by an integral 4.00KW IP55 rated motor. Located adjacent to the bleached oil storage area and rated to deliver 25000 LPH to the deodoriser D1 via the duplex feed strainer E15. The pump body and impeller are of hardened cast iron/steel components and a mechanical seal is fitted within the wetted area. The pump is of monobloc design and can be bolted directly to a concrete plinth in the drum bay area.

### E15 Feed Strainer

A duplex unit of cast iron/steel construction with st st baskets of 80 microns. The filter is set within pipeworks connected between the pump - bleached oil transfer, E14 and the deodoriser D1.

### E16 Settling Pit

A compartmented water tight concrete pit arranged to separate free oils condensed in the vacuum condenser water by free flotation. Chemical or air floatation treatment may be added if required.

### E17 Pump - Cooling Tower (1) Feed

A centrifugal pump driven by an integral 7.50KW IP55 rated motor. Located adjacent to the settling pit E16 and rated to deliver 100000 LPH to the cooling tower (2) from the pit. The pump body and impeller are of hardened cast iron/steel components and a mechanical seal is fitted within the wetted area. The pump is of monobloc design and can be bolted directly to a concrete plinth.

### E18 Pump - Drum Filling

A gear pump driven by an integral 0.25KW IP55 rated motor. Located adjacent to the settling pit E16 and rated to deliver 500 LPH. The pump body and gears are of hardened cast iron/steel components and a mechanical seal is fitted within the wetted area. The pump is of monobloc design and can be bolted directly to a concrete plinth.

### E19 Refined oil storage Tank

A vertical cylindrical carbon steel insulated tank of approximately 30,000L storage capacity fitted with an internal seamless carbon steel coil designed for temperature maintenance/adjustment at approximately 50°C. Construction would comprise of a cone top with top and side access manways and a cone base. Support to be via three equidistant legs suitable for load cell operation.

### E20 Refined oil storage Tank

A vertical cylindrical carbon steel insulated tank of approximately 30,000L storage capacity as E19 above.

### E21 Pump - Refined Oil Transfer

A centrifugal pump driven by an integral 5.50KW IP55 rated motor. Located adjacent to the refined oil storage area and rated to deliver 30000 LPH to transportation. The pump body and impeller are of hardened cast iron/steel components and a mechanical seal is fitted within the wetted area the pump is of monobloc design and can be bolted directly to a concrete plinth.

### E22 Seal Tank - Vacuum Plant

A 1000L rectangular carbon steel vessel, sub-floor mounted to receive all condenser waters upon the high level vacuum plants and to create an effective water seal at all times. Overflow from the seal tank is to the settling pit E16.

### Cooling tower (40)

A cooling tower for atmospheric cooling of the condensing waters from the direct contact vacuum raising system and pumped into the cooling tower by the pump - cooling tower (40) feed E17 from the settlement pit E16. Supplied in two parts for ease of container transit, the unit is site assembled as free standing upon an external concrete plinth situated adjacent to the settlement pit. The design is of an induced air format having two axial fans, each driven by a dedicated integral 2.2 KW IP55 rated motor. Case construction is of galvanised sheeting finished with an anti-corrosive paint.

### Pump - Cooling Tower (40) Discharge

A centrifugal pump driven by an integral 15.00 KW IP55 rated motor. Located adjacent to the cooling tower (40), and rated to deliver 100000 LPH to the vacuum system supply header pipe. The pump body and impeller are of hardened cast iron/steel components and a mechanical seal is fitted within the wetted area. The pump is of monobloc design and can be bolted directly to a concrete plinth adjacent to the cooling tower (40).

### Cooling Tower (41)

A cooling tower for atmospheric cooling of the closed circuit indirect heat exchange water circuits. Cooling water is discharged from the tower basin by a pump (not illustrated), and returned thereafter by gravity . Supplied in two parts for ease of container transit, the unit is site assembled as free standing upon an external concrete plinth situated adjacent to the cooling tower (40). The design is of an induced air format having two axial fans, each driven by a dedicated integral 2.2 KW IP55 rated motor. Case construction is of galvanised sheeting finished with an anti-corrosive paint.

### Pump - Cooling Tower (41) Discharge

A centrifugal pump driven by an integral 15.00KW IP55 rated motor. Located adjacent to the cooling tower (41), and rated to deliver 83000 LPH to the indirect heat exchange cooling water supply header pipe. The pump body and impeller are of hardened cast iron/steel components and a mechanical seal is fitted within the wetted area . The pump is of monobloc design and can be bolted directly to a concrete plinth adjacent to the cooling tower (41).
High level gantries, access ladders and pipe bridges are also provided.

### Compressed Air receivers

A set of receivers (not illustrated) are strategically located to serve the local demands of line blowing and remote valve control as applicable.

### Installation materials - Refinery to External

A set of inter-connecting: process and service pipes, cables (control and power) and all interconnecting instrument and load cell cables /glands.

The process operation of an edible oil refinery 10 in accordance with the present invention is as follows:

### A) Neutralising

Crude oil enters the plant via the crude oil feed vessel N11 from where it pumped at a controlled rate through the oil heater N4. Initially the oil is heated only by steam but, shortly thereafter, the outgoing neutralised oil is used in the first stage of the oil heater to preheat the crude oil and thereby reduce the steam demand. The oil heater raises the crude oil temperature to approximately 95°C . Phosphoric acid may be required for certain oils, and if so, it is now injected at a controlled rate. It is intensively contacted with the oil in the mixer No. 1, N6, thereby precipitating gums, metal compounds and other impurities which are subsequently removed, together with the soapstock formed during neutralisation, by the separator No. 1, N11.

The acid conditioned and/or heated oil is reacted with caustic soda solution injected at a controlled rate in the neutralising mixers No. 2 and/or 3 N8 & N10, depending on the type and quality of the feedstock. The caustic neutralises the free fatty acids and the excess of mineral acid in the oil, forming soapstock, which is removed together with excess caustic solution and other impurities in separator No. 1, N11.

Some crude oils of inferior quality (oxidised, dark coloured and having a high content of non-hydratable phosphatides) may require a second treatment with caustic (termed as re-refining) to achieve the best possible refined oil quality. In most cases the temperature is kept constant, normally in the range of 85 to 100°C, through the whole refining process. Caustic is brought into intimate contact with the oil in the mixer No. 4, N18, after which the oil enters separator No. 2, N17 where further resultant soap stock is again removed.

When processing cotton seed oil, which has gossypol colour bodies which would be difficult to remove in subsequent bleaching, neutralisation is preferably undertaken at a temperature of approximately 70°C and re-fining at approximately 95°C. The higher temperature is achieved by heating the oil in the oil heater N14.

The neutralised oil contains small amounts of residual soap which must be minimized before further processing. Oil is therefore contacted with softened hot water in the high-speed mixer No. 5, N21. As a result thereof, almost all of the soap is dissolved in the water phase and removed from the oil in separator No. 3, N22.

The washed oil contains about 0.5% of dissolved water which is reduced to <0.5% by spray assisted vacuum evaporation in the drier N23, which is held at approximately 50 mbar.a. The hot dried oil is then passed through the oil heater N4, to assist in heating the incoming crude oil, before being cooled at the oil cooler N25 en route to the neutralised oil storage vessels.

When the oil quality permits use of separator No. 2 as a first stage for washing, the water recovered from separator No. 3 may be reused, after removal of oil/soap in the oil/water separator vessel N27. The result is a considerable saving in the consumption of softened water and energy.

The plant is designed for continuous operation and requires a minimum of attention. The main process parameters and plant functions are supervised from a central process control panel A1.

### B) Bleaching and Filtration

The removal of colour pigments from natural oils by adsorption onto natural 'earths' and/or activated carbons is generally termed the bleaching process.

In this continuous bleaching system oil is pumped to the earth slurry vessel B1 from the neutralised oil storage vessels, whilst bleaching earth is continuously dosed into the oil. Here it is thoroughly mixed using a high speed agitator. The earth rate addition is dependant upon the oil colour/quality actual and required. Earth flow is set at the earth feeder B3 to provide an appropriate amount proportional to a pre-set oil feed rate of the pump E10.

The slurry produced is pumped to the deaerator B5. This unit operates under vacuum and removes entrained air from the slurry before heating to the required bleaching temperature of approximately 100°C.

On leaving the oil heater B7, the slurry passes continuously to the bleacher B8. The bleacher B8 is fitted with a high speed turbine style agitator and also operates under a vacuum of approximately 50 mbar.a to preserve oil quality. The vacuum unit applicable is B16. Pigment absorption is completed in the bleacher and the clay has now to be removed from the oil. Separation is achieved by use of a vertical leaf filter B10. In this equipment, the earth is deposited on stainless steel fine mesh leaves forming a cake on the surface whilst the oil passes on to the hold vessel B12.

Bleaching is continuous, but filtration is necessarily discontinuous to allow time for cleaning. Hence the bleacher is constructed with adequate volume to provide a residence period of approximately 30 minutes for pigment adsorption by the clay and further time for continuous filling during the period when the discharge system is interrupted by the leaf filter cleaning cycle.

Filtration is commenced by pumping the slurry from the bleacher base, through the leaf filter body and back to the bleacher, thus removing air from the system. Thereafter the air vent route is closed and the leaf filter set to discharge via the filter plates, again initially recycling back to the bleacher. This route is maintained until an earth "cake" layer has been achieved. Once the oil appears clear, the downstream route to the hold vessel B12 is opened, and the recycle line closed.

Once the filter cycle is complete, i.e. when the maximum 'cake' holding capacity of the filter leaves is achieved, the filter is first emptied of its retained oil and earth slurry, via gravity drainage to the earth slurry vessel. The 'cake' is then steam blown to dry it, achieving an oil entrainment of approximately 25% of residual oil. The base cone butterfly valve is then opened and the dried 'cake' automatically vibrated from the leaves, falling by gravity to the cake skip B11. Upon completion of the leaf filter cleaning cycle, the filter base outlet valve is again closed and the unit returned to duty.

Oil in the hold vessel is pumped to final cooling via a secondary earth filter B14, before passing through the economiser section of oil heater B7, and on to the oil cooler B15, en route to the bleached oil storage vessels.

The whole plant operates continuously and is automatically controlled to ensure residence times at critical stages of 'earth' addition/mixing, deaeration and bleaching.

### C) Deodorisation

The process of removing oxidation products and other odoriferous volatile compounds from edible oils is generally referred to as deodorisation.

It is this process which renders the oil palatable to the human taste and improves its general properties before use in a myriad of edible products. Deodorisation is effected by high vacuum steam distillation of the unwanted volatile material.

The stainless steel deodoriser D1, is of a single pass batch operation design having internal coils (heating and cooling). The deodoriser D1 is connected to a multi-stage high vacuum plant utilising steam ejectors and direct contact water condensers D8.

As a first operation, to both aid oil transfer and ensure that the oil does not deteriorate in transfer to the deodoriser, a "booster" steam ejector is employed to raise vacuum quickly. Once vacuum has been established at an acceptable level oil is charged into the deodoriser from the bleached oil storage vessels using a high capacity pump E14. The batch of oil is then heated quickly via internal steam coils operating in a closed loop system using a high pressure steam generator.

The generator produces dry saturated steam adjustable in the range 50 > 70 bar.g.

Meanwhile the full vacuum plant is also brought into operation. Typical vacuum levels are of the order of 4 to 6 mbar and this is maintained throughout the process of deodorisation.

At approximately 70°C live steam (stripping steam) is injected into the base of the unit via distributor manifolds and injectors. These are of a unique design and used to promote both heat transfer and efficient steam/oil contact; thus effective distillation. Deodorisation is effected in the temperature range of approximately 180 > 240°C. This temperature of deodorisation depends on the specific oil in process, its feed quality and the degree of "stripping" required.

Following deodorisation the oil is cooled via internal cooling coils to an acceptable discharge temperature of around 80°C. During this cooling period "stripping steam" is maintained simply to promote heat transfer. Citric acid and/or antioxidant may be added at an appropriate point (governed by temperature). Upon completion of cooling the discharge pump D2, transfers the finished oil to refined oil storage via a final oil cooler D3, and polishing filter D4. The former is for the purpose of reducing the temperature further for storage purposes, approximately 50°C, and the latter to impart a 'sparkle' in the now fully refined oil.

The deodoriser can be used to "physical" refine (steam stripping) suitably pre-treated oils. This alternative to caustic neutralisation - "alkaline" refining - may be applied to some oils, but not all, and utilises the vacuum steam distillation technique of deodorisation to distill fatty acids rather than react them with caustic for removal as soapstock. Additional pre-treatment equipment is necessary for this purpose.

As shown in Fig. 3, the containers 1 - 5 are adapted to receive external cladding.

Although the present invention has been described by way of reference to an edible oil refinery, it is to be understood that the present invention can be adapted for use with any type of process or processing plant.

## Claims

1. A process plant (10) comprising a plurality of transportable containers (1-5) each container (1-5) housing at least one component of the process plant (10) such that the process plant (10) can be constructed by suitably positioning the transportable containers (1-5) relative to one another and suitably connecting the components housed therein.

2. A process plant as claimed in claim 1, wherein at least of one of the transportable containers is adapted to receive external cladding.

3. A process plant as claimed in claim 2, wherein the external cladding includes a sloping roof.

4. A process plant (10) as claimed in claim 1 which can be used to refine edible oil, the process plant including five transportable containers (1-5), a first and second transportable containers (1, 2) that house the neutralising components of the process plant, a third container (3) that houses the dry storage components of the process plant, a fourth transportable container (4) that houses the bleaching and filtration components of the process plant and a fifth transportable container (5) that houses the deodorising components of the process plant.

5. A process plant as claimed in claim 1, wherein said components are mounted to the floor and/or walls of said transportable containers (1-5).

6. A process plant as claimed in claim 5, wherein when said components are mounted to the floor of said transportable containers (1-5), the floor of the transportable container (1-5) is provided with a plinth to which the components are attached.
